# FASCICULE DE BREVET EUROPEEN

(11) **EP 0 898 357 B1**
(45) Date de publication et mention de la délivrance du brevet: **19.11.2008**
(21) Numéro de dépôt: 98402089.1
(22) Date de dépôt: 21.08.1998
(51) Int. Cl.: H02M 3/335

(54) **Dispositif de conversion d'énergie à courant continu**
Gleichstromwandlervorrichtung
DC energy converter device

(30) Priorité: 21.08.1997 FR 9710538
(43) Date de publication de la demande: 24.02.1999
(73) Titulaire: ALSTOM Transport SA, 75116 Paris (FR)
(72) Inventeur: Nguyen, Uyen Thuy, 38090 Villefontaine (FR)
(74) Mandataire: Blot, Philippe Robert Emile

(56) Documents cités:
- WO-A-93/12570
- US-A- 5 255 174
- KHERALUWALA M H: "PERFORMANCE CHARACTERIZATION OF A HIGH-POWER DUAL ACTIVE BRIDGE DC-TO-DC CONVERTER" IEEE TRANSACTIONS ON INDUSTRY APPLICATIONS, vol. 28, no. 6, 1 novembre 1992, pages 1294-1301, XP000331298

## Description

La présente invention concerne les convertisseurs de courant continu et se rapporte plus particulièrement à de tels convertisseurs appliqués aux véhicules à traction électrique notamment aux trolleybus.

Dans le domaine de la conversion statique d'énergie, on connaît des dispositifs de conversion d'énergie à courant continu en énergie à courant alternatif reposant sur la technique des onduleurs monophasés, triphasés ou polyphasés avec un nombre de phases différent de trois.

On connaît également des dispositifs de conversion d'énergie à courant alternatif en énergie à courant continu dont la construction repose sur l'emploi de redresseurs monophasés, triphasés ou polyphasés.

On connaît de plus un dispositif de conversion d'énergie à courant continu en énergie à courant continu, à isolement galvanique faisant appel au principe des onduleurs - redresseurs monophasés, triphasés ou polyphasés associant les deux structures précédentes avec un transformateur interposé entre l'ensemble onduleur du dispositif de convertisseur de courant continu en courant alternatif et l'ensemble redresseur du dispositif de conversion du courant alternatif en courant continu.

Ce type de convertisseur présente l'inconvénient d'être unidirectionnel, le transfert d'énergie ne s'effectuant que dans un seul sens.

Un autre inconvénient d'un tel dispositif réside dans le fait que la tension redressée de sortie ne peut en aucun cas dépasser la tension à vide du secondaire du transformateur.

On connaît également par les documents US5255174 et "Performance characterization of a high-power dual active bridge", Kheraluwala, IEEE Transactions on Industry Applications, vol. 28, no. 6, un dispositif de conversion d'énergie à courant continu en énergie à courant continu, comportant un transformateur, comprenant un enroulement primaire et au moins un enroulement secondaire, un premier onduleur connecté aux bornes de l'enroulement primaire du transformateur et un second onduleur connecté aux bornes du ou de chaque enroulement du transformateur, ledit premier ou ledit au moins second onduleur assurant la fonction d'onduleur proprement dit lorsqu'une tension à convertir est appliquée à ses bornes et la fonction de redresseur lorsque la tension à convertir est appliquée audit au moins un second ou audit premier onduleur, le dispositif de conversion formant élévateur de tension dans lequel ledit au moins un onduleur assurant la fonction de redresseur comporte dans chacune de ses branches, un interrupteur commandé cycliquement et coopérant avec une inductance d'emmagasinage d'énergie pendant la conduction successive de chacun des interrupteurs et avec un condensateur de stockage de l'énergie emmagasinée dans l'inductance correspondante dès l'arrêt de la conduction desdits interrupteurs.

Par ailleurs, un problème concernant les véhicules à traction électrique est celui de l'isolement de leur système d'alimentation.

L'invention vise à remédier aux inconvénients des dispositifs connus.

Elle a donc pour objet un véhicule à traction électrique selon la revendication 1.

On évite ainsi le double isolement de l'ensemble du dispositif de conversion.

Suivant d'autres caractéristiques de l'invention,
- chaque interrupteur est commandé à la même fréquence que ledit au moins un onduleur qui reçoit la tension à convertir,
- l'inductance d'emmagasinage d'énergie pendant la conduction successive de chacune des branches de l'onduleur correspondant est l'inductance de fuite du transformateur.

L'invention sera mieux comprise à l'aide de la description qui va suivre, donnée uniquement à titre d'exemple et faite en se référant aux dessins annexés, sur lesquels :
- la Fig.1 est une vue schématique d'un dispositif monophasé de conversion de tension continue en tension continue suivant l'invention;
- la Fig.2 est une vue schématique d'un dispositif triphasé de conversion de tension continue en tension continu;
- les Figs.3 et 4 sont des vues schématiques de dispositifs de conversion monophasé et triphasé à transformateur à deux enroulements secondaires ; et
- la Fig. 5 est une vue schématique de l'application du dispositif de conversion de tension suivant l'invention à un véhicule à traction électrique.

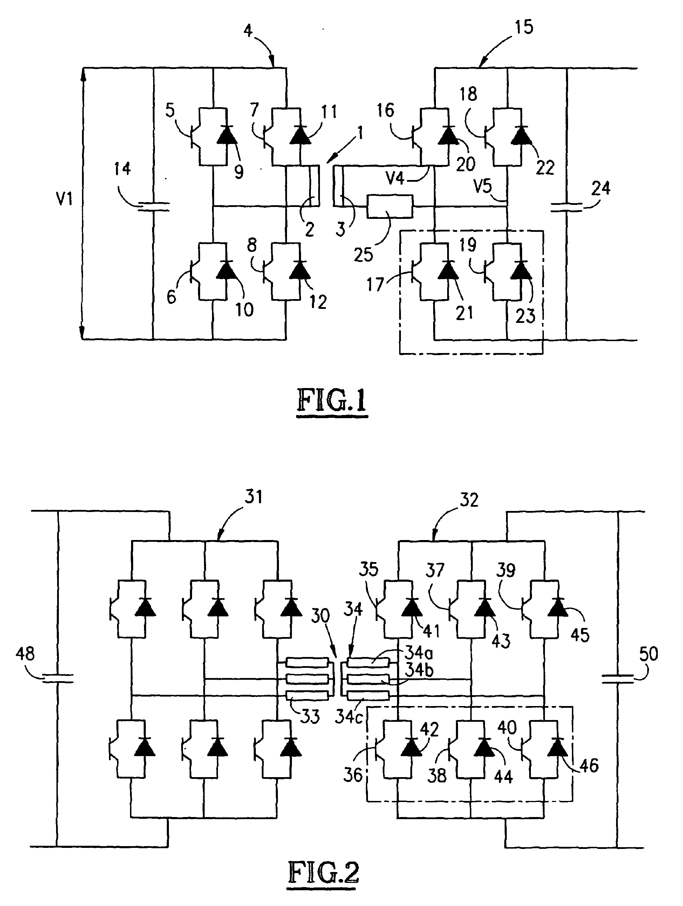

Le dispositif de conversion d'énergie en courant continu en énergie en courant continu représenté à la figure 1, comporte un transformateur 1 comprenant un enroulement primaire 2 et un enroulement secondaire 3.

Aux bornes de l'enroulement primaire est connecté un premier onduleur 4 constitué d'un pont de transistors 5,6,7,8 sur les trajets émetteur-collecteur desquels sont connectées des diodes respectives 9,10,11 et 12. L'enroulement primaire 2 du transformateur 1 est connecté entre les jonctions des transistors 5 et 6 d'une part, et 7 et 8 d'autre part.

Les points de jonction des transistors 5 et 7 d'une part et 6 et 8 d'autre part, constituent les bornes de l'onduleur, un condensateur 14 dont la fonction sera indiquée plus loin étant connecté à ces bornes.

Les transistors 5,6,7,8 sont avantageusement des transistors du type bipolaire à grille isolée IGBT. A la place des transistors 5 à 8 on peut utiliser tout type d'interrupteurs statiques à semi-conducteurs tels que par exemple les GTO, MOSFET etc. L'enroulement secondaire 3 du transformateur 1 est connecté à un second onduleur 15 comprenant un pont de transistors 16,17,18,19. En parallèle sur le trajet émetteur-collecteur de chacun des transistors 16 à 19 sont connectées des diodes correspondantes 20 à 23.

L'enroulement secondaire 3 du transformateur 1 est connecté entre les points de jonction des transistors 16 et 17 d'une part, et 18, et 19 d'autre part.

Les jonctions entre les transistors 16 et 18 d'une part et 17 et 19 d'autre part, constituent les bornes du second onduleur 15.

Un condensateur 24 est connecté à ces bornes.

Les transistors 16 à 19 sont avantageusement des transistors de type IGBT.

En série avec l'enroulement secondaire 3 est en outre connectée une inductance 25. Cette inductance peut être constituée par une inductance séparée ou bien encore être formée par l'inductance de fuite du transformateur 1. Elle peut aussi être formée par la combinaison de l'inductance de fuite du transformateur associée à une inductance séparée supplémentaire afin de disposer d'une valeur d'inductance adaptée à l'application envisagée.

Lorsque le dispositif fonctionne en conversion courant continu - courant continu normale, l'enroulement primaire 2 du transformateur 1 est alimenté par le premier onduleur 4 qui reçoit à son entrée, une tension continue V1 à convertir.

L'enroulement secondaire 3 du transformateur 1 alimente le pont de diodes 20 à 23 du second onduleur 15 qui ainsi assure la fonction de redresseur.

En faisant varier le rapport cyclique a de fonctionnement du premier onduleur 4, on fait varier la tension de sortie du pont de diodes 20 à 23 du second onduleur 15.

Dans ce mode de fonctionnement, le condensateur 24 assure une simple fonction de filtrage.

La tension de sortie est inférieure ou égale à K fois la tension appliquée à l'entrée du premier onduleur 4.

K désigne le rapport de transformation du transformateur 1.

Bien entendu, si la tension à convertir est appliquée à l'entrée du second convertisseur 15, c'est le pont de diodes 9 à 12 du premier onduleur 4 qui assure la fonction de redresseur de la même manière que décrit précédemment.

Pour obtenir l'effet d'élévation de tension, on commande deux des transistors 17 et 19 du second onduleur 15 pour qu'ils fonctionnement cycliquement avec un rapport cyclique β avec la même fréquence que celle du premier onduleur 4, β étant inférieur au rapport cyclique α du premier onduleur 4.

Lorsque l'onde de tension secondaire est respectivement positive ou négative, on amorce le transistor 17 ou 19, la conduction alternée de ces deux transistors ayant pour effet un emmagasinage d'énergie dans l'inductance 25.

Lors du blocage des transistors précités, l'énergie emmagasinée dans l'inductance 25 est transférée dans le condensateur de sortie 24, par l'intermédiaire de la diode 20.

En faisant varier le rapport cyclique β, on fait varier l'effet élévateur de tension pour régler la tension de sortie aux bornes du condensateur 24.

Le fonctionnement en l'élévateur de tension pour obtenir les tensions de sortie plus élevées que la tension à vide délivrées par l'enroulement secondaire du transformateur s'explique de la manière suivante. Soient V4 et V5 les tensions aux bornes de l'enroulement secondaire 3 du transformateur.

Lorsque la tension V4 - V5 est positive, c'est-à-dire que V4 est supérieure à V5, le transistor 17 est rendu conducteur pendant un court instant, ce qui a pour effet de provoquer l'emmagasinage d'énergie dans l'inductance 25.

Ensuite, le transistor 17 est bloqué, ce qui a pour effet de provoquer la décharge dans le condensateur de sortie 24, de l'énergie emmagasinée dans l'inductance 25. Cet échange d'énergie se traduit par une surtension U=U(transfo) +LDI/DT.

Lorsque la tension V4-V5 est négative c'est-à-dire que V5 est supérieure à V4, il y a déclenchement du transistor 19 de la même manière que décrit précédemment.

Le réglage de la surtension est effectué en faisant conduire plus ou moins longtemps, les transistors 17 et 19 formant interrupteurs. Ce réglage est fonction du choix de la valeur de l'inductance 25.

Dans l'exemple qui vient d'être décrit les transistors 17 et 19 formant interrupteurs sont commandés à la même fréquence que celle du premier onduleur 4. Ces interrupteurs peuvent être commandés à une fréquence différente de celle du premier onduleur de manière à maîtriser la forme d'onde de courant dans le transformateur.

L'agencement qui vient d'être décrit peut également fonctionner en élévateur de tension dans l'autre sens auquel cas, ce sont les transistors 6 et 8 du premier onduleur 4 fonctionnant en redresseur qui sont commandés en actionnement cyclique de la même manière que les transistors 17 et 19.

Le dispositif convertisseur décrit en référence à la figure 1, est de type monophasé.

Bien entendu, l'invention s'applique également à un convertisseur de tension continue en tension continue réversible de type triphasé. Un tel circuit est représenté sur la figure 2. Ce circuit est en tout point semblable à celui de la figure 1, à l'exception du fait qu'il comporte un transformateur triphasé 30 et des onduleurs également triphasés 31 et 32, connectés respectivement aux enroulements primaire 33 et secondaire 34 du transformateur 30.

L'onduleur 32 comporte trois branches comprenant chacune deux transistors 35,36,37,38,39,40 sur les trajets émetteur-collecteur desquels sont connectées en parallèle des diodes 41,42,43,44,45,46. L'onduleur 31 est de construction identique.

Les enroulements secondaires 34a à 34c du transformateur triphasé sont directement connectés respectivement aux points de jonction des transistors 35,36, des transistors 37,38 et des transistors 39,40. Leurs inductances de fuite constituent donc leurs inductances d'emmagasinage d'énergie lors du fonctionnement du dispositif en élévateur. Des inductances séparées peuvent également être connectées en série entre les enroulements secondaires précités et les points de fonction des transistors associés.

Comme dans le mode de réalisation de la figure 1, des condensateurs 48,50 sont respectivement connectés aux bornes des trois branches des onduleurs 31 et 32.

Le fonctionnement du circuit la figure 2, est semblable pour chaque phase au fonctionnement du dispositif de conversion monophasé décrit en référence à la figure 1.

Lorsque le dispositif fonctionne en élévateur, il y a commande de la conduction momentanée d'un transistor 36,38,40 de chacune des branches de l'onduleur 32 qui assure la fonction de redresseur et après blocage de chaque transistor, transfert au condensateur 36, de l'énergie emmagasinée dans l'inductance de fuite correspondante du transformateur 30, par l'intermédiaire des diodes 41,43,45.

Bien entendu, le fonctionnement est similaire si c'est l'onduleur 31 qui fonctionne en redresseur.

La réversibilité des circuits qui viennent d'être décrit est manifeste en raison de la symétrie des schémas décrits en référence aux dessins.

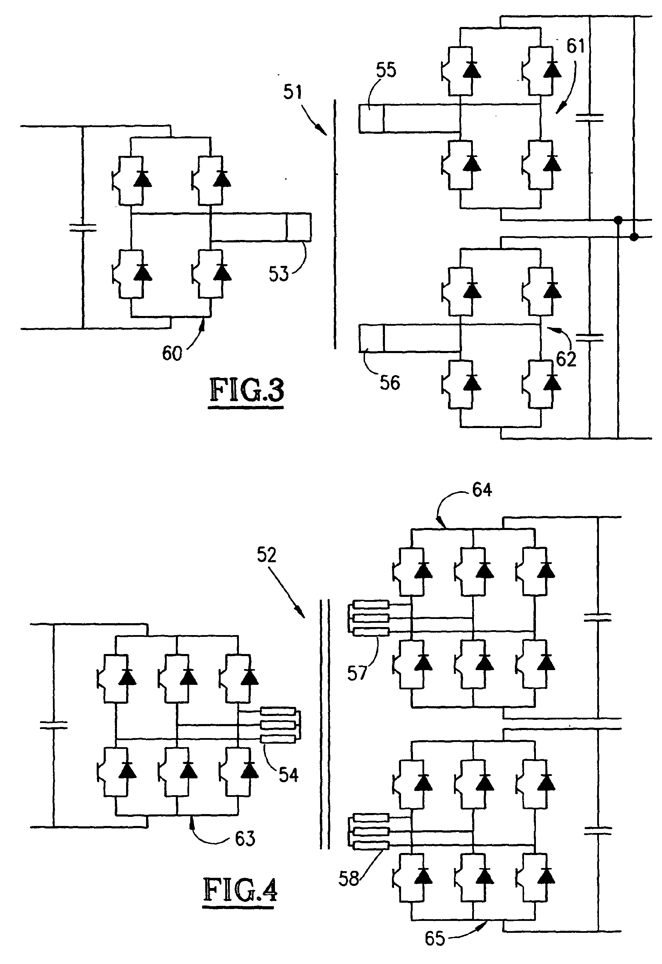

Comme représenté aux figures 3 et 4, l'invention s'applique également à un dispositif de conversion monophasé ou triphasé construit à partir d'un transformateur 51,52 à un enroulement primaire 53,54 et au moins deux enroulements secondaires 55,56,57,58. Des onduleurs 60,61,62,63, 64,65 analogues à ceux décrits en référence aux figures 1 et 2 sont associés à chacun des enroulements du transformateur qu'il soit monophasé ou triphasé. Un tel agencement présente un intérêt particulier pour l'alimentation de plusieurs moteurs électriques de traction d'un véhicule.

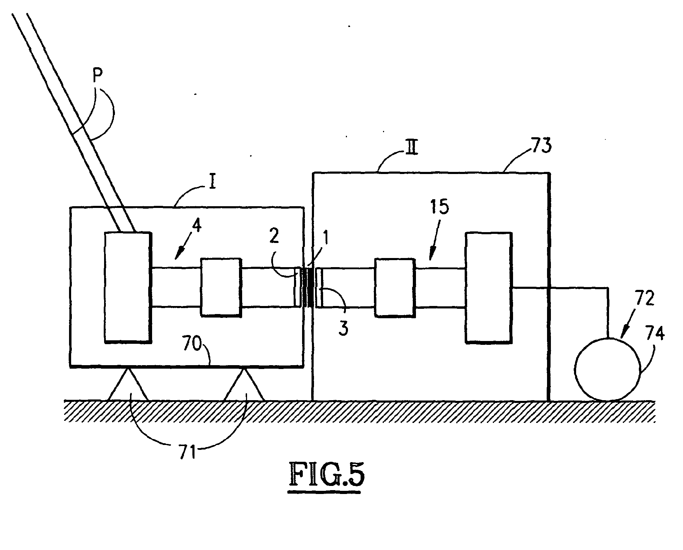

Sur la Fig. 5 on a représenté schématiquement le dispositif de conversion d'énergie suivant l'invention appliqué à un véhicule à traction électrique tel qu'un trolleybus.

Dans les trolleybus classiques, les équipements à haute tension du dispositif de conversion sont isolés dans un premier coffre ou coffre intermédiaire, lequel est isolé à son tour par rapport à la masse générale du véhicule, de sorte que les équipements à haute tension sont doublement isolés de la masse générale.

Le moteur de propulsion est lui aussi isolé de la masse générale du véhicule. Un tel agencement impose des solutions mécaniques encombrantes, lourdes et onéreuses.

Le dispositif de conversion suivant l'invention permet de réaliser un bon isolement avec une structure allégée.

Comme représenté à la Fig. 5, le dispositif de conversion comporte une partie I à haute tension nécessitant un double isolement et une partie II à moyenne tension ne nécessitant qu'un isolement simple.

On va supposer à titre d'exemple que le dispositif de conversion utilisé dans le véhicule de la Fig. 5 est semblable à celui de la Fig. 1.

On comprendra cependant que les autres dispositifs de conversion décrits plus haut peuvent également équiper un tel véhicule.

La partie I à haute tension comporte l'enroulement primaire 2 du transformateur 1 et l'onduleur 4 associé dont l'entrée est reliée aux perches P du véhicule.

Cette partie est contenue dans un premier coffre 70 isolé de la masse générale du véhicule par des plots 71 en matière isolante. La partie II à moyenne tension comprend l'enroulement secondaire 3 du transformateur 1 et l'onduleur 15 associé dont la sortie est connectée à un moteur électrique de propulsion 72.

La partie II qui ne nécessite pas de double isolement est contenue dans un second coffre 73 relié à la masse générale du véhicule.

De même, la carcasse 74 du moteur électrique de propulsion qui matérialise la chaîne de propulsion est reliée à la masse générale du véhicule.

On évite ainsi le double isolement de l'ensemble.

Seul l'étage à haute tension qui convertit l'énergie à haute tension en une énergie à moyenne tension qui alimente la chaîne de propulsion est isolé par un double isolement.

Les équipements de propulsions ne doivent satisfaire qu'au simple isolement.

## Revendications

1. Véhicule à traction électrique, equipé pour l'alimentation de sa chaîne de propulsion, d'un dispositif de conversion d'énergie à courant continu en énergie à courant continu, comportant un transformateur (1;30;51;52), comprenant un enroulement primaire (2 ;33;53;54) et au moins un enroulement secondaire (3;34;55,56;57,58), un premier onduleur (4;31;60;63) connecté aux bornes de l'enroulement primaire (2;33;53;54) du transformateur et au moins un second onduleur (15;32;61,62;64,65) connecté aux bornes du ou de chaque enroulement secondaire (3;34;55,56;57,58) du transformateur, ledit premier ou ledit au moins un second onduleur (4;31;60;63 ou 15;32;61,62;64,65) assurant la fonction d'onduleur proprement dit lorsqu'une tension à convertir est appliquée à ses bornes et la fonction de redresseur lorsque la tension à convertir est appliquée audit au moins un second ou audit premier onduleur (15;32;61,62;64,65 ou 4;31;60;63), ledit dispositif formant élévateur de tension dans lequel ledit au moins un onduleur (4,15;31,32;60,61,62;63,64,65) assurant la fonction de redresseur comporte dans chacune de ses branches un interrupteur (17,19,6,8;36,38,40) commandés cycliquement et coopérant avec une inductance d'emmagasinage d'énergie pendant la conduction successive de chacun des interrupteurs et avec un condensateur (14,24;48,50) de stockage de l'énergie emmagasinée dans l'inductance correspondante dès l'arrêt de la conduction desdits interrupteurs
et en ce qu'une partie (I) à haute tension du dispositif de conversion comprenant l'enroulement primaire (2 ;33;53;54) du transformateur et l'onduleur associé (4;31;60;63) est contenue dans un premier coffre (70) isolé de la masse générale du véhicule par des plots (71) en matière isolante, et une partie (II) à moyenne tension du dispositif de conversion comprenant l'enroulement secondaire (3;34;55,56;57,58) du transformateur et l'onduleur associé (15;32;61,62;64,65) est contenue dans un second coffre (73) relié à la masse générale du véhicule.

2. Véhicule à traction électrique selon la revendication 1, **caractérisé en ce que** chaque interrupteur (17,19,6,8;36,38,40) est commandé cycliquement à la même fréquence que ledit au moins un onduleur (4,15;31,32,60,61,62;63,64,65) qui reçoit la tension à convertir.

3. Véhicule à traction électrique selon la revendication 1, **caractérisé en ce que** ladite inductance d'emmagasinage d'énergie est l'inductance de fuite du transformateur (1;30;51;52).

4. Véhicule à traction électrique selon l'une des revendications 1 et 2, **caractérisé en ce que** ladite inductance d'emmagasinage d'énergie est une inductance séparée.

5. Véhicule à traction électrique selon l'une des revendications 1 et 2, **caractérisé en ce que** ladite inductance est formée par la combinaison de l'inductance de fuite du transformateur associée à une inductance séparée supplémentaire.

## Claims

1. Electric traction vehicle,
provided, for powering its drive chain, with a device for converting direct-current energy into direct-current energy, comprising a transformer (1; 30; 51; 52) having a primary winding (2; 33; 53; 54) and at least one secondary winding (3; 34; 55, 56; 57, 58), a first inverter (4; 31; 60; 63) connected to the terminals of the primary winding (2; 33; 53; 54) of the transformer and at least one second inverter (15; 32; 61, 62; 64, 65) connected to the terminals of the or of each secondary winding (3; 34; 55, 56; 57, 58) of the transformer, the said first or the said at least one second inverter (4; 31; 60; 63 or 15; 32; 61, 62; 64, 65) functioning as an actual inverter when a voltage to be converted is applied to its terminals and as a rectifier when the voltage to be converted is applied to the said at least one second or to the said first inverter (15; 32; 61, 62; 64, 65 or 4; 31; 60; 63), the said device forming a voltage booster in which the said at least one inverter (4, 15; 31, 32; 60, 61, 62; 63, 64, 65) functioning as a rectifier comprises, in each of its branches, a circuit breaker (17, 19, 6, 8; 36, 38, 40), these being controlled cyclically and cooperating with an energy storage inductance during the successive conduction of each of the circuit breakers and with a capacitor (14, 24; 48, 50) for storing energy stored in the corresponding inductance from the time conduction of the said circuit breakers ceases
and in that a high-voltage part (I) of the conversion device having the primary winding (2; 33; 53; 54) of the transformer and the associated inverter (4; 31; 60; 63) is contained within a first chamber (70) isolated from the general mass of the vehicle by blocks (71) of insulating material, and a medium-voltage part (II) of the conversion device having the secondary winding (3; 34; 55, 56; 57, 58) of the transformer and the associated inverter (15; 32; 61, 62; 64, 65) is contained within a second chamber (73) connected to the general mass of the vehicle.

2. Electric traction vehicle according to Claim 1, **characterised in that** each circuit breaker (17, 19, 6, 8; 36, 38, 40) is controlled cyclically at the same frequency as the said at least one inverter (4, 15; 31, 32, 60, 61, 62; 63, 64, 65) which receives the voltage to be converted.

3. Electric traction vehicle according to Claim 1, **characterised in that** the said energy storage inductance is the leakage inductance of the transformer (1; 30; 51; 52).

4. Electric traction vehicle according to either of Claims 1 and 2, **characterised in that** the said energy storage inductance is a separate inductance.

5. Electric traction vehicle according to either of Claims 1 and 2, **characterised in that** the said inductance is formed by the combination of the leakage inductance of the transformer associated with a supplementary separate inductance.

## Patentansprüche

1. Elektrisches Zugfahrzeug, vorgesehen zur Versorgung seines Antriebszugs mit einer Vorrichtung zur Umwandlung von Gleichstromenergie in Gleichstromenergie, umfassend einen Transformator (1;30:51;52), mit einer Primärwicklung (2;33;53;54) und zumindest einer Sekundärwicklung (3;34;55;56;57,58), einem ersten Wechselrichter (4;31;60;63), der mit den Kontakten der Primärwicklung (2;33;53;54) des Transformators verbunden ist, und zumindest einem zweiten Wechselrichter (15;32;61;62;64;65), der mit den Kontakten der oder jeder Sekundärwicklung (3;34;55;56;57;58) des Transformators verbunden ist, welcher erste oder welcher zumindest zweite Wechselrichter (4;31;60;63 oder 15;32;61;62;64;65) die ordnungsgemäße Funktion dieses Wechselrichters sicherstellen, wenn eine umzuwandelnde Spannung an seinen Kontakten angelegt wird, sowie die Funktion der Gleichrichtung, wenn die umzuwandelnde Spannung an dem zumindest zweiten oder an dem ersten Wechselrichter (15; 32; 61; 62; 64; 65 oder 4;31;60;63) angelegt wird, welche Vorrichtung einen Spannungsheber bildet, in welchem der zumindest eine Wechselrichter (4,15;31,32;60,61,62;63,64,65), der die Funktion des Gleichrichters sicherstellt, in einem seiner Zweige einen Unterbrecher (17,19,6,8;36,38,40) umfaßt, der zyklisch gesteuert wird und mit einer Induktanz zur Einlagerung von Energie während der sukzessiven Leitung von einem der Unterbrecher und mit einem Kondensator (14,24;48,50) zur Speicherung der entsprechenden in der Induktanz eingelagerten Energie seit dem Abbruch der Leitung der Unterbrecher,
wobei ein Hochspannungsteil (I) der Umwandlungsvorrichtung eine Primärwicklung (2;33;53;54) des Transformators umfaßt und der entsprechende Wechselrichter (4;31;60;63) in einem ersten Gehäuse (70) enthalten ist, das von der Hauptmasse des Fahrzeugs durch Kontaktpunkte (71) aus isolierendem Material isoliert ist, und ein Mittelspannungsteil (II) der Umwandlungsvorrichtung eine Sekundärwicklung (3;34;55;56;57;58) des Transformators umfaßt, und der entsprechende Wechselrichter (15;32;61;62;64;65) in einem zweiten Gehäuse enthalten ist, das mit der Hauptmasse des Fahrzeugs verbunden ist.

2. Elektrisches Zugfahrzeug gemäß Anspruch 1, **dadurch gekennzeichnet, dass** jeder Unterbrecher (17,19,6,8;36,38,40) zyklisch in der gleichen Frequenz gesteuert wird wie der zumindest eine Wechselrichter (4,15-,31,32;60,61,62;63,64,65), der die umzuwandelnde Spannung aufnimmt.

3. Elektrisches Zugfahrzeug gemäß Anspruch 1, **dadurch gekennzeichnet, dass** die Induktanz zur Lagerung von Energie die Streuinduktanz des Transformators (1;30;51;52) ist.

4. Elektrisches Zugfahrzeug gemäß einem der Ansprüche 1 oder 2, **dadurch gekennzeichnet, dass** die Induktanz zur Lagerung von Energie eine separate Induktanz misst.

5. Elektrisches Zugfahrzeug gemäß einem der Ansprüche 1 oder 2, **dadurch gekennzeichnet, dass** die Induktanz gebildet wird aus der Kombination der Streuinduktanz des entsprechenden Transformators und einer ergänzenden getrennten Induktanz.
